# EUROPÄISCHE PATENTSCHRIFT

(11) **EP 1 688 319 B1**
(45) Veröffentlichungstag und Bekanntmachung des Hinweises auf die Patenterteilung: **08.09.2010**
(21) Anmeldenummer: 05027754.0
(22) Anmeldetag: 19.12.2005
(51) Int. Cl.: B60R 21/16, D03D 1/02, D01F 1/10, D01F 6/60

(54) **Gassack**
Air bag
Coussin gonflable

(30) Priorität: 03.02.2005 DE 102005005023
(43) Veröffentlichungstag der Anmeldung: 09.08.2006
(73) Patentinhaber: TRW Automotive Safety Systems GmbH, 63743 Aschaffenburg (DE)
(72) Erfinder: Deckenhoff, Michael, 48249 Dülmen (DE)
(74) Vertreter: Mehnert, Bernhard

(56) Entgegenhaltungen:
- WO-A-01/02629
- WO-A-93/04117
- WO-A-99/41299
- US-B1- 6 444 596
- PATENT ABSTRACTS OF JAPAN Bd. 015, Nr. 252 (C-0844), 26. Juni 1991 (1991-06-26) & JP 03 081364 A (UBE IND LTD; others: 02), 5. April 1991 (1991-04-05)

## Beschreibung

Die Erfindung betrifft einen Gassack zur Verwendung in einem Fahrzeuginsassen-Rückhaltesystem.

Gassackgewebe bestehen im allgemeinen aus Polyamiden, beispielsweise Polyamid 6 oder Polyamid 6.6. Zum Schutz vor den bei der Aktivierung des Gasgenerators freigesetzten und auf das Gassackgewebe auftreffenden heißen Gasen und Partikeln werden die Gewebe üblicherweise mit einer Silikonbeschichtung versehen. Die Beschichtung verhindert auch den langsamen Abbau des Gewebematerials durch Einwirkung von Umwelteinflüssen wie Rost und Feuchtigkeit.

Die DE 41 42 884 A1 beschreibt einen Gassack mit einer Wandung aus einem Gewebe, das aus Verbundfasern mit einem Faserkern und einem an den Faserkern gebundenen thermoplastischen Polymer hergestellt ist. Der Faserkern kann aus Polyamidfasern, Polyesterfasern, und hochelastischen Fasern wie Aramidfasern und Polyethylenfasern gebildet sein.

Die Gassackgewebe aus Polyamid oder anderen Polymeren haben sich in der Praxis bewährt und erfüllen auch die bei den Grenztemperaturen zwischen -35 °C und +85 °C geltenden Anforderungen. Unter Echttemperatur-Prüfbedingungen in der Klimakammer ist jedoch insbesondere im Tieftemperaturbereich eine Beeinträchtigung der Gewebestabilität zu beobachten.

Die Erfindung schafft ein Gassackgewebe, bei dem diese Nachteile vermieden werden, das auch ohne Silikonbeschichtung langzeitstabil und hitzebeständig ist und das insbesondere bei tiefen Temperaturen eine verbesserte mechanische Festigkeit aufweist. Erfindungsgemäß wird dazu ein Gassack zur Verwendung in einem Fahrzeuginsassen-Rückhaltesystem bereitgestellt, wobei der Gassack wenigstens eine Wandung oder einen Wandungsteil aus einem Gewebe umfasst, das aus Fasern gebildet ist, dadurch gekennzeichnet, daß die Fasern eine Polymermatrix mit darin verteilten exfolierten Schichtsilikatpartikeln umfassen, wobei die exfolierten Schichtsilikatpartikel eine Dicke von 0,5 bis 2 nm und einen Flächendurchmesser von bis zu 10 µm aufweisen.

Die Verwendung von Polymeren, die erfindungsgemäß mit den plättchenförmigen exfolierten Schichtsilikatpartikeln gefüllt sind, bei der Herstellung der Gassackgewebe führt zu einer Verbesserung nahezu aller mechanischen Eigenschaften der Gewebe. Insbesondere kann eine deutliche Steigerung des Elastizitätsmoduls, der Streckspannung und der Temperaturbeständigkeit der gefüllten Polymere beobachtet werden. Darüber hinaus werden auch die Oberflächenqualität der Gewebe, deren Verschmutzungsanfälligkeit und chemische Beständigkeit sowie die Wärmeformbeständigkeit und die Flammschutzeigenschaften verbessert. Da die Gewebe auch bei tiefen Temperaturen im Bereich von -35°C und mehrmaligen Temperaturwechseln zwischen -35°C und +85°C in der Klimakammer nicht verspröden, können sie auch bei diesen Temperaturen größere Lasten aufnehmen. Die Funktionssicherheit der Gewebe ist damit insbesondere auch bei tiefen Temperaturen gewährleistet.

Die Schichtsilikatpartikel liegen bevorzugt in einem Anteil von 0,5 bis 10 Gew.-Teilen, besonders bevorzugt von 1 bis 6 Gew.-Teilen pro 100 Gew.-Teilen der Polymermatrix vor. Als Schichtsilikate können natürliche oder synthetische Zweischicht- oder Dreischichtsilikate eingesetzt werden, die zum Ionenaustausch geeignet sind. Typische Vertreter sind Montmorrilonit, Saponit, Beidelit, Nontronit, Sauconit, Stevensonit und Hektorit, Bentonit, Vermiculit, Halloysit, Kaolin, Calciummethasilikat oder Smektit sowie chlorierte oder fluorierte synthetische Derivate dieser Mineralien, wie Fluorosmektit. Die Schichtsilikate weisen bevorzugt eine Ionenaustauschkapazität von mindestens 20 bis 200 meq/100 g (Milliäquivalente bezogen auf 100 g Feststoffgehalt) auf. Die Ionenaustauschkapazität gibt die Konzentration an Ionen an, die durch Lösungen neutraler Salze von der Schichtsilikatoberfläche durch einen stöchiometrischen Ionenaustauschmechanismus substituierbar sind.

Die Oberfläche der Schichtsilikatpartikel kann durch Ionenaustausch mit organischen Oniumverbindungen, wie beispielsweise Ammoniumverbindungen (NR₄⁺), Phosphoniumverbindungen (PR₄⁺), Oxoniumverbindungen (R₃O⁺), Diazoniumverbindungen RN₂⁺, Arsoniumverbindungen (AsR₄⁺) und Sulfoniumverbindungen (R₃S⁺), hydrophobiert sein. Die Reste R der organischen Oniumverbindung können gleich oder verschieden sein und sind aus der aus Wasserstoff, substituierten und unsubstituierten, gesättigten und ungesättigten Alkylgruppen mit 1 bis 40 Kohlenstoffatomen mit oder ohne Verzweigung und substituierten und unsubstituierten Arylgruppen und Benzylgruppen bestehenden Gruppe ausgewählt, wobei mindestens ein organischer Rest R eine mit funktionellen Gruppen substituierte oder unsubstituierte, gesättigte oder ungesättigte Alkylgruppe mit mindestens 6 Kohlenstoffatomen ist.

Bevorzugt sind diejenigen quartären Ammoniumverbindungen, die von Lactamen oder ω-Aminosäuren und deren Derivate abgeleitet sind.

Die für die Herstellung der mit den Schichtsilikatpartikeln gefüllten Polymerfasern verwendeten Formmassen können durch Einbringen der gegebenenfalls hydrophobierten Schichtsilikate vor, während oder nach der Polymerisation der Monomere zur Polymermatrix gebildet werden. Eine Zugabe der Schichtsilikate nach der Polymerisation erfolgt vorzugsweise zur Schmelze des Matrixpolymers in einem Extruder. Durch die bei der Extrusion wirkenden Scherkräfte werden die Schichtsilikate exfoliert, d.h. delaminiert, und die daraus entstehenden plättchenförmigen Schichtsilikatpartikel werden geichmäßig in der Polymermatrix verteilt. Die Polymermatrix kann aus den für die Herstellung von Gassackgeweben grundsätzlich bekannten Polymeren bestehen. Geeignet sind insbesondere thermoplastische Polymere wie Polyamid, sowie thermoplastische Olefine und Polyester.

Die Polymermatrix kann zusätzlich weitere faserförmige Verstärkungsstoffe und/oder mineralische Füllstoffe enthalten. Als faserförmige Verstärkungsstoffe sind Glasfasern, Kohlefasern, Aramidfasern, Mineralfasern und Whisker geeignet. Als mineralische Füllstoffe können Calciumcarbonat, Dolomit, Calciumsulfat, Glimmer, Fluorglimmer, Wollastonit, Talkum und Kaolin sowie Oxide und Oxidhydrate von Bor, Aluminium, Gallium, Indium, Silizium, Zinn, Titan, Zirkonium, Zink, Yttrium oder Eisen verwendet werden. Die weiteren Füllstoffe liegen vorzugsweise in einem Anteil von bis zu 30 Gew.-Teilen, bezogen auf 100 Gew.-Teile der Polymermatrix, vor, und zwar zusätzlich zu den exfolierten Schichtsilikatpartikeln.

Schließlich kann in der Polymermatrix ein Kupplungsmittel zur Verbindung der Schichtsilikatpartikel mit der Polymermatrix enthalten sein. Geeignete Kupplungsmittel sind beispielsweise Organosilane und Polysiloxane mit endständigen funktionellen Gruppen, wie beispielsweise Aminosilane, Vinylsilane, Glyzidoxysilane oder Polysiloxanole, die einerseits chemisch an die anorganischen Schichtsilikatpartikel und andererseits an die organische Polymermatrix binden können. Die Kupplungsmittel können zusätzlich zu den oben genannten Oniumverbindungen oder, bei entsprechender Funktionalisierung, auch anstelle der organischen Oniumverbindungen eingesetzt werden. Ferner können die Kupplungsmittel auch indirekt, über funktionelle Gruppen der Oniumverbindung, an die Schichtsilikatpartikel gebunden sein. Bei Verwendung der Kupplungsmittel ist eine weitere Verbesserung der mechanischen Eigenschaften der erfindungsgemäßen Gassackgewebe zu erwarten.

Die durch Eincompoundieren der hydrophobierten und/gegebenenfalls durch Beimischen von Kupplungsmitteln modifizierten Schichtsilikate in die Polymermatrix erhaltenen Formmassen lassen sich durch bekannte Trocken-, Naß- oder Schmelzspinnverfahren zu Polymerfasern verarbeiten, aus denen die erfindungsgemäßen Gassackgewebe herstellbar sind. Die so erhaltenen Gassackgewebe sind auch bei tiefen Temperaturen mechanisch stabil und können daher auch im Grenztemperaturbereich von -35°C noch hohe Lasten aufnehmen.

Weitere Vorteile der Erfindung ergeben sich aus der nachfolgenden Beschreibung eines bevorzugten Ausführungsbeispiels, das jedoch nicht in einschränkendem Sinn zu verstehen ist.

### Ausführungsbeispiel

3 Gew.-Teile eines hydrophobierten Schichtsilikats (Bentonit, hydrophobiert mit Dimethyldioctadecylammoniumchlorid; Flächendurchmesser >1 µm, Schichtdicke 0,5 bis 2 nm) und 100 Gew.-Teile Polyamid 6 (Ultramid B5 Natur, BASF) wurden zunächst in einem Mischer homogenisiert und anschließend auf einem Zweischneckenextruder bei ca. 260°C compoundiert, in ein Wasserbad extrudiert und granuliert. Aus dem so erhaltenen Granulat wurden Fasern gezogen und in der Klimakammer einem Temperaturwechselversuch im Bereich zwischen -35°C und 85°C unterzogen. Auch nach mehrmaligen Temperaturwechseln war keine Änderung der mechanischen Eigenschaften der Polymerfasern feststellbar.

Vergleichsversuche mit reinem Polyamid 6 (Ultramid B5) ergaben für die mit hydrophobiertem Bentonit gefüllten Polymerfasern eine Steigerung des E-Moduls von 58 %, der Streckspannung von 19 % und der Temperaturbeständigkeit um 15°C.

## Patentansprüche

1. Gassack zur Verwendung in einem Fahrzeuginsassen-Rückhaltesystem, mit wenigstens einer Wandung oder einem Wandungsteil aus einem Gewebe, das aus Fasern gebildet ist, **dadurch gekennzeichnet, daß** die Fasern eine Polymermatrix mit darin verteilten exfolierten Schichtsilikatpartikeln umfassen, wobei die exfolierten Schichtsilikatpartikel eine Dicke von 0,5 bis 2 nm und einen Flächendurchmesser von bis zu 10 µm aufweisen.

2. Gassack nach Anspruch 1, **dadurch gekennzeichnet, daß** die Schichtsilikatpartikel in einem Anteil von 1 bis 6 Gewichtsteilen pro 100 Gewichtsteilen der Polymermatrix vorliegen.

3. Gassack nach Anspruch 1 oder 2, **dadurch gekennzeichnet, daß** die Schichtsilikatpartikel unter Verwendung von organischen Oniumverbindungen hydrophobiert sind.

4. Gassack nach Anspruch 3, **dadurch gekennzeichnet, daß** die organischen Oniumverbindungen aus der Gruppe der von Aminosäuren und Aminosäurederivaten abgeleiteten Verbindungen ausgewählt sind.

5. Gassack nach einem der vorhergehenden Ansprüche, **dadurch gekennzeichnet, daß** die Schichtsilikate aus der aus Montmorrilonit, Saponit, Beidelit, Nontronit, Sauconit, Stevensonit, Hektorit, Bentonit, Vermiculit, Halloysit, Kaolin, Calciummethasilikat, Smektit und Fluorosmektit bestehenden Gruppe ausgewählt sind.

6. Gassack nach einem der vorhergehenden Ansprüche, **dadurch gekennzeichnet, daß** die Polymermatrix ferner ein Kupplungsmittel zur Verbindung der Schichtsilikate mit der Polymermatrix umfaßt.

7. Gassack nach Anspruch 6, **dadurch gekennzeichnet, daß** das Kupplungsmittel aus der Gruppe der Organosilane und Polysiloxane mit endständigen funktionellen Gruppen ausgewählt ist.

8. Gassack nach Anspruch 7, **dadurch gekennzeichnet, daß** das Kupplungsmittel aus der Gruppe der Aminosilane, Vinylsilane, Glyzidoxysilane und Polysiloxanole sowie deren Derivate und Mischungen ausgewählt ist.

9. Gassack nach einem der vorhergehenden Ansprüche, **dadurch gekennzeichnet, daß** die Polymermatrix aus der Gruppe der thermoplastischen Polymere und thermoplastischen Elastomere ausgewählt ist.

10. Gassack nach einem der vorhergehenden Ansprüche, **dadurch gekennzeichnet, daß** die Polymermatrix aus Polyamid besteht.

11. Gassack nach einem der vorhergehenden Ansprüche, **dadurch gekennzeichnet, daß** das Gewebe unbeschichtet ist.

## Claims

1. An airbag for use in a vehicle occupant restraint system comprising at least one wall or part thereof made of woven fabric formed of fibers, **characterized in that** the fibers include a polymer matrix having dispersed exfoliated layered silicate particles, wherein the exfoliated layered silicate particles have a thickness of 0.5 to 2 nm and a surface diameter of up to 10 µm.

2. An airbag according to claim 1, **characterized in that** the layered silicate particles are provided at a share of 1 to 6 parts by weight per 100 parts by weight of the polymer matrix.

3. An airbag according to claim 1 or 2, **characterized in that** the layered silicate particles are subjected to hydrophobing using organic onium compounds.

4. An airbag according to claim 3, **characterized in that** the organic onium compounds are selected from the group of compounds derived from amino acids and amino acid derivatives.

5. An airbag according to any one of the preceding claims, **characterized in that** the layered silicates are selected from the group consisting of montmorrilonite, saponite, beidelite, nontronite, sauconite, stevensonite, hektorite, bentonite, vermiculite, halloysite, kaolin, calcium methasilicate, smektite and fluorosmektite.

6. An airbag according to any one of the preceding claims, **characterized in that** the polymer matrix further includes a coupling agent for bonding the layered silicates to the polymer matrix.

7. An airbag according to claim 6, **characterized in that** the coupling agent is selected from the group of organic silanes and polysiloxanes having terminal functional groups.

8. An airbag according to claim 7, **characterized in that** the coupling agent is selected from the group of aminosilanes, vinyl silanes, glycidic oxysilanes and polysiloxanes as well as the derivatives and mixtures thereof.

9. An airbag according to any one of the preceding claims, **characterized in that** the polymer matrix is selected from the group of thermoplastic polymers and thermoplastic elastomers.

10. An airbag according to any one of the preceding claims, **characterized in that** the polymer matrix consists of polyamide.

11. An airbag according to any one of the preceding claims, **characterized in that** the tissue is uncoated.

## Revendications

1. Coussin gonflable pour utilisation dans un dispositif de retenue de véhicule avec au moins une paroi ou une partie de paroi faite d'un tissu, formé de fibres synthétiques, **caractérisé par le fait que** les fibres comprennent une matrice polymère avec des particules de phyllosilicate dispersées et exfoliées, et où les particules de phyllosilicate exfoliées ont une épaisseur comprise entre 0,5 et 2nm et un diamètre surfacique allant jusqu'à 10 µm.

2. Coussin gonflable d'après la revendication n°1, **caractérisé en ce que** les particules de phyllosilicate représentent une part variant entre 1 à 6 parts en masse pour cent parts en masse de matrice polymère.

3. Coussin gonflable d'après la revendication n°1 ou 2, **caractérisé en ce que** les particules de phyllosilicate sont hydrophobes par utilisation de liaisons organiques -onium.

4. Coussin gonflable d'après la revendication n°3, **caractérisé en ce que** les liaisons organiques -onium sont choisies parmi le groupe des liaisons dérivées des acides aminés et des dérivés d'acides aminés.

5. Coussin gonflable d'après l'une des revendications précédentes, **caractérisé en ce que** le phyllosilicate est choisi parmi le groupe formé de la montmorillonite, la saponite, la beidellite, la nontronite, la sauconite, la stevensite, l'hectorite, la bentonite, la vermiculite, l'halloysite, le kaolin, la wollastonite, la smectite et la smectite fluorée.

6. Coussin gonflable d'après l'une des revendications précédentes, **caractérisé en ce que** la matrice polymère comprend de plus un moyen de couplage pour la liaison des phyllosilicates avec la matrice polymère.

7. Coussin gonflable d'après la revendication n°6, **caractérisé en ce que** le moyen de couplage est choisi parmi le groupe des organosilanes et des polysiloxanes avec groupes fonctionnels terminaux.

8. Coussin gonflable d'après la revendication n°7, **caractérisé en ce que** le moyen de couplage est choisi parmi le groupe des amino-silanes, des silanes de vinyle, des glycidoxy-silanes et des polysiloxanols ainsi que de leurs dérivés ou mélanges.

9. Coussin gonflable d'après l'une des revendications précédentes, **caractérisé en ce que** la matrice polymère est choisie parmi le groupe des polymères thermoplastiques et des élastomères thermoplastiques.

10. Coussin gonflable d'après l'une des revendications précédentes, **caractérisé en ce que** la matrice polymère est en polyamide.

11. Coussin gonflable d'après l'une des revendications précédentes, **caractérisé en ce que** le tissu n'est pas enduit.
